(19) Europäisches Patentamt / European Patent Office / Office européen des brevets

(11) **EP 4 772 057 A1**

(12) **EUROPEAN PATENT APPLICATION**
published in accordance with Art. 153(4) EPC

(43) Date of publication:
08.07.2026 Bulletin 2026/28

(21) Application number: 24852261.7

(22) Date of filing: 05.08.2024

(51) International Patent Classification (IPC):
A24F 40/95 (2020.01)          A24F 40/90 (2020.01)
A24F 40/46 (2020.01)          A24F 40/50 (2020.01)
A24F 40/57 (2020.01)          A24F 40/42 (2020.01)
H02J 7/00 (2026.01)

(52) Cooperative Patent Classification (CPC):
A24F 40/42; A24F 40/46; A24F 40/50; A24F 40/57;
A24F 40/90; A24F 40/95; H02J 7/00

(86) International application number:
PCT/KR2024/011534

(87) International publication number:
WO 2025/033907 (13.02.2025 Gazette 2025/07)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 09.08.2023  KR 20230104388
29.12.2023  KR 20230197458

(71) Applicant: KT&G Corporation
Daedeok-gu
Daejeon 34337 (KR)

(72) Inventors:
• SEO, Jang Won
Daejeon 34023 (KR)

• KIM, Jae Hyuk
Seoul 06352 (KR)
• PARK, Sang Cheol
Suwon-si, Gyeonggi-do 16469 (KR)
• WOO, Young Min
Hwaseong-si, Gyeonggi-do 18391 (KR)
• LEE, Won Kyeong
Guri-si, Gyeonggi-do 11920 (KR)
• JANG, Chul Ho
Bucheon-si, Gyeonggi-do 14725 (KR)
• JUNG, Jin Chul
Daejeon 34079 (KR)
• HAN, Dae Nam
Seoul 06331 (KR)

(74) Representative: Ter Meer Steinmeister & Partner
Patentanwälte mbB
Nymphenburger Straße 4
80335 München (DE)

(54) **AEROSOL GENERATING DEVICE AND OPERATING METHOD THEREFOR**

(57) An aerosol generating device according to an embodiment includes a battery detachably disposed in a receiving portion, a battery monitoring unit configured to measure operation information of the battery, and a controller including an internal resistance calculation unit configured to calculate internal resistance of the battery based on the operation information of the battery. The controller is configured to determine whether the battery is normally mounted in the receiving portion by comparing a value of the calculated internal resistance with a preset reference value range.

FIG. 3

## Description

## Technical Field

The present disclosure relates to an aerosol generating device and an operating method therefor. More particularly, the present disclosure relates to an aerosol generating device capable of determining whether a removable battery is normally mounted in a receiving portion of the aerosol generating device and an operating method for the aerosol generating device.

## Background Art

Recently, there has been an increasing demand for smoking methods that replace general cigarettes. For example, there is an increasing demand for a method of generating aerosol by heating an aerosol generating article in a cigarette, rather than a method of generating aerosol by burning a cigarette. Accordingly, research on a heating-type cigarette or a heating-type aerosol generating device has been actively conducted.

An aerosol generating device may receive power from a battery for an overall operation of the device and heating of a heater. Recently, countries have shown a tendency to demand that electronic devices including batteries have eco-friendliness and stability throughout the entire life cycle, from battery production to recycling, to improve the global environment.

## Disclosure of Invention

## Technical Problem

An objective of the present disclosure is to provide an aerosol generating device capable of simply and quickly determining whether a removable battery is normally mounted by using battery characteristics and an operating method for the aerosol generating device.

An objective of the present disclosure is to provide an aerosol generating device capable of improving the accuracy of determining whether a removable battery is normally mounted by analyzing battery characteristics in response to a battery use environment and an operating method for the aerosol generating device.

However, objectives to be achieved by the embodiments are not limited thereto, and other unmentioned objectives will be apparent to one of ordinary skill in the art to which the embodiments pertain from the present specification and the attached drawings.

## Solution to Problem

An aerosol generating device according to an embodiment includes a battery detachably disposed in a receiving portion, a battery monitoring unit configured to measure operation information of the battery, and a controller including an internal resistance calculation unit configured to calculate internal resistance of the battery based on the operation information of the battery. The controller is configured to determine whether the battery is normally mounted in the receiving portion by comparing a value of the calculated internal resistance with a preset reference value range.

An operating method for an aerosol generating device according to an embodiment includes mounting a battery in a receiving portion, measuring operation information of the battery, calculating internal resistance of the battery based on the operation information of the battery, and determining whether the battery is normally mounted in the receiving portion by comparing a value of the calculated internal resistance with a preset reference value range.

## Advantageous Effects of Invention

Because an aerosol generating device and an operating method therefor according to various embodiments of the present disclosure simply and quickly determine whether a removable battery is normally mounted by using internal resistance of the removable battery, device failure may be prevented and user safety may be ensured by activating only when the removable battery is normally mounted.

Because an aerosol generating device and an operating method therefor according to various embodiments of the present disclosure analyze internal resistance of a battery based on at least one of a temperature, a charging rate, and the number of charge/discharge cycles of the battery, the accuracy of determining whether a removable battery is normally mounted may be improved.

Effects of the embodiments are not limited thereto, and other unmentioned effects will be apparent to one of ordinary skill in the art to which the embodiments pertain from the present specification and the attached drawings.

## Brief Description of Drawings

FIG. 1 is a block diagram illustrating a hardware configuration of an aerosol generating device, according to an embodiment.

FIGS. 2A to 2E are views illustrating various implementations of embodiments of the aerosol generating device of FIG. 1.

FIG. 3 is a schematic block diagram for describing a method of determining whether a battery of an aerosol generating device is normally mounted, according to an embodiment.

FIG. 4A is an equivalent circuit diagram illustrating a removable battery.

FIG. 4B is a diagram for describing a method of calculating internal resistance of a removable battery.

FIG. 5 is a view for describing a message displayed when a removable battery is abnormally mounted on an aerosol generating device.

FIG. 6 is a schematic block diagram for describing a method of determining whether a battery of an aerosol generating device is normally mounted, according to another embodiment.

FIG. 7A is a graph illustrating a change in internal resistance according to a temperature. FIG. 7B is a graph illustrating a change in internal resistance according to a state of charge (SOC). FIG. 7C is a graph illustrating a change in internal resistance according to the number of charge/discharge cycles.

FIG. 8 is a flowchart for describing an operating method for an aerosol generating device, according to an embodiment.

**Mode for the Invention**

Regarding the terms in the various embodiments, the general terms which are currently and widely used are selected in consideration of functions of structural elements in the various embodiments of the present disclosure. However, meanings of the terms can be changed according to intention, a judicial precedence, the appearance of a new technology, and the like. In addition, in certain cases, terms which can be arbitrarily selected by the applicant in particular cases. In such a case, the meaning of the terms will be described in detail at the corresponding portion in the description of the present disclosure. Therefore, the terms used in the various embodiments of the present disclosure should be defined based on the meanings of the terms and the descriptions provided herein.

In addition, unless explicitly described to the contrary, the word "comprise" and variations such as "comprises" or "comprising" will be understood to imply the inclusion of stated elements but not the exclusion of any other elements. In addition, the terms "-er", "-or", and "module" described in the specification mean units for processing at least one function and operation and can be implemented by hardware components or software components and combinations thereof.

Hereinafter, the present disclosure will now be described more fully with reference to the accompanying drawings, in which exemplary embodiments of the present disclosure are shown such that one of ordinary skill in the art may easily work the present disclosure. The disclosure can, however, be embodied in many different forms and should not be construed as being limited to the embodiments set forth herein.

Hereinafter, embodiments of the present disclosure will be described in detail with reference to the drawings.

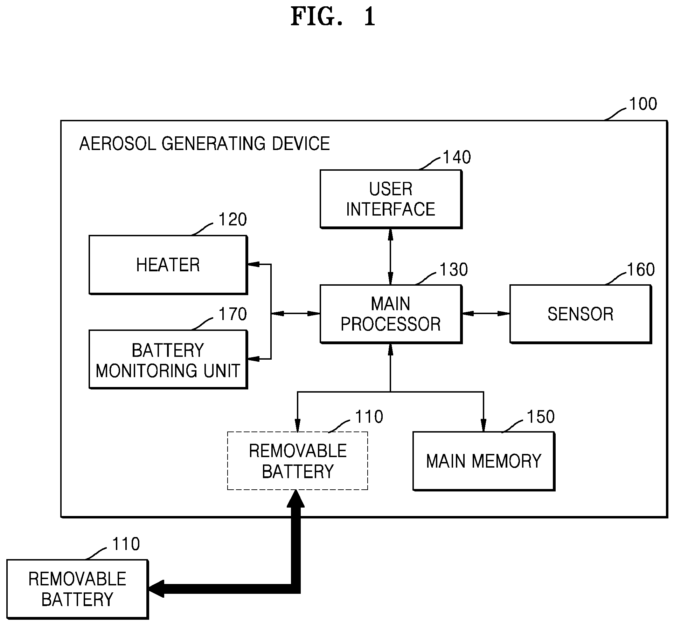

FIG. 1 is a block diagram illustrating a hardware configuration of an aerosol generating device, according to an embodiment.

Referring to FIG. 1, an aerosol generating device 100 may include a removable battery 110, a heater 120, a main processor 130, a user interface 140, a main memory 150, a sensor 160, and a battery monitoring unit 170. However, hardware components inside the aerosol generating device 100 are not limited to those illustrated in FIG. 1. It will be understood by one of ordinary skill in the art related to the present embodiment that some of the hardware components illustrated in FIG. 1 may be omitted or new components (e.g., a connecting port and other communication modules) may be further added according to a design of the aerosol generating device 100.

Hereinafter, an operation of each component included in the aerosol generating device 100 will be described without limiting a space where each component is located.

The removable battery 110 supplies power used to operate the aerosol generating device 100. For example, the removable battery 110 may supply power so that the heater 120 is heated. Also, the removable battery 110 may supply power required for operations of other hardware components provided in the aerosol generating device 100, that is, the heater 120, the main processor 130, the user interface 140, the main memory 150, the sensor 160, or the battery monitoring unit 170. The removable battery 110 may be, for example, but is not limited to, a lithium polymer (LiPoly) battery or a lithium ion battery.

The removable battery 110 is a replaceable (separable) power source, and may be mounted in or removed from a battery receiving portion provided in the aerosol generating device 100. The removable battery 110 may include an electrical contact, and when the removable battery 110 is mounted on the aerosol generating device 100, the electrical contact of the removable battery 110 may be electrically connected to an electrical contact provided in the aerosol generating device 100 to supply power to the aerosol generating device 100. In another example, instead of a separate electrical contact, the removable battery 110 may include a charging coil for supplying power to the aerosol generating device 100 by using a wireless charging method. That is, there may be various power supply methods of the removable battery 110, and an electrical connection method between the removable battery 110 and the aerosol generating device 100 may vary according to a power supply method supported by the removable battery 110.

The removable battery 110 according to an embodiment may include at least one battery cell. The battery cell may have different electrodes formed at both ends along a longitudinal direction or may be formed in a cylindrical shape. However, a shape of the battery cell is not limited thereto. For example, the battery cell may be a prismatic battery cell or a pouch-type battery cell.

The heater 120 receives power from the removable battery 110 under the control of the main processor 130. The heater 120 may heat a cigarette inserted into the aerosol generating device 100 or heat a cartridge mounted on the aerosol generating device 100, by using power supplied from the removable battery 110. That is, the heater 120 may generate aerosol by heating an aerosol generating material provided in the cigarette or the cartridge.

The heater 120 may be located in a main body of the aerosol generating device 100. Alternatively, when the aerosol generating device 100 includes the main body and the cartridge, the heater 120 may be located in the cartridge. When the heater 120 is located in the cartridge, the heater 120 may receive power from the removable battery 110 located in the main body.

The heater 120 may be an electro-resistive heater formed of an electro-resistive material. For example, the electro-resistive material may be a metal or a metal alloy including, but not limited to, titanium, zirconium, tantalum, platinum, nickel, cobalt, chromium, hafnium, niobium, molybdenum, tungsten, tin, gallium, manganese, iron, copper, stainless steel, or nichrome. The heater 120 may include, but is not limited to, a metal heating wire, a metal heating plate on which an electrically conductive track is disposed, or a ceramic heating element.

The heater 120 may be an induction heater. The heater 120 may correspond to a heater assembly implemented as a set of an electrically conductive coil and a susceptor for heating the cigarette or the cartridge through induction heating.

The heater 120 may heat the cigarette inserted into a receiving space provided in the aerosol generating device 100. As the cigarette is accommodated in the receiving space of the aerosol generating device 100, the heater 120 may be located inside and/or outside the cigarette. Accordingly, the heater 120 may generate aerosol by heating an aerosol generating material in the cigarette.

The heater 120 may be implemented as a coil heater provided only in the cartridge. The cartridge may include the coil heater, a liquid transfer means, and a liquid storage, and a liquid generating material accommodated in the liquid storage may be transferred through the liquid transfer means and the coil heater may heat the aerosol generating material absorbed by the liquid transfer means to generate aerosol. For example, when the heater 120 is the coil heater, the heater 120 may be made of a material such as nickel chromium and may be wound around the liquid transfer means or disposed adjacent to the liquid transfer means.

The main processor 130 is hardware that controls an overall operation of the aerosol generating device 100. The main processor 130 may include at least one processing unit such as a microcontroller unit (MCU). The main processor 130 may include an array of logic gates, or may include a combination of a general-purpose microprocessor and a memory in which a program executable by the microprocessor is stored. Also, it will be understood by one of ordinary skill in the art to which the present embodiment pertains that the main processor 130 may be implemented as another type of hardware.

The main processor 130 may analyze a result sensed by the sensor 160 and may control processes to be performed later based on the sensed result. For example, the main processor 130 may control power supplied to the heater 120 so that an operation of the heater 120 starts or ends, based on the result sensed by the sensor 160. Also, the main processor 130 may control the amount or time of power supplied to the heater 120 so that the heater 120 is heated to a certain temperature or is maintained at an appropriate temperature, based on the result sensed by the sensor 160.

The main processor 130 may control an operation of the heater 120 based on a pre-stored temperature profile. Also, the main processor 130 may sense a user's puff by using a puff sensor in the sensor 160, and then may control a temperature of the heater 120. Also, the main processor 130 may count the number of puffs by using the puff sensor, and then when the number of puffs reaches a preset number, may stop power supply to the heater 120.

The main processor 130 may control the user interface 140, based on the sensed result. For example, when the number of puffs is counted by using the puff sensor and then the number of puffs reaches a preset number, the main processor 130 may notify the user that the aerosol generating device 100 will soon be terminated by using a lamp, a motor, or a speaker.

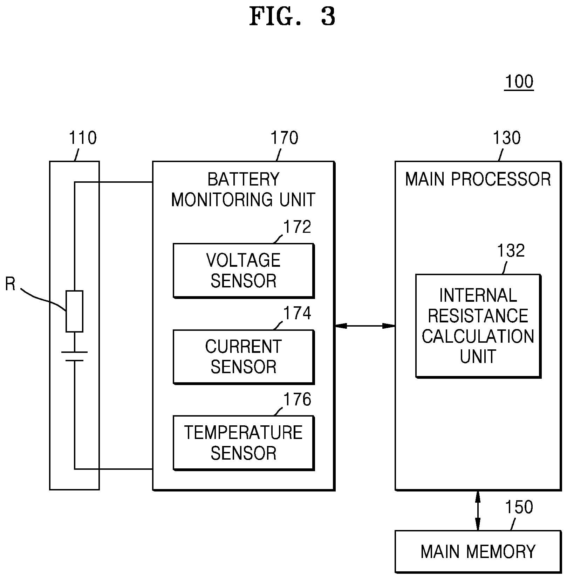

Also, the main processor 130 may determine whether the removable battery 110 is normally mounted in a receiving portion, based on operation information of the aerosol generating device 100 received from the battery monitoring unit 170. Hereinafter, a detailed method by which the main processor 130 determines whether the removable battery 110 is normally mounted will be described in detail with reference to FIGS. 3 to 7.

The user interface 140 may provide information about a state of the aerosol generating device 100 to the user. The user interface 140 may include various interfacing means such as a display or a lamp that outputs visual information (UI screen), a motor that outputs haptic information, a speaker that outputs sound information, an input/output interfacing means (e.g., a button or a touchscreen) that receives input information from the user or outputs information to the user, and terminals for receiving charging power.

The main memory 150 is hardware in which various pieces of data processed in the aerosol generating device 100 are stored, and the main memory 150 may store pieces of data processed and to be processed by the main processor 130. The main memory 150 may include various types of memories, such as random-access memory such as dynamic random access memory (DRAM) or static random access memory (SRAM), read-only memory (ROM), and electrically erasable programmable read-only memory (EEPROM).

The main memory 150 may store various information such as an operation time of the aerosol generating device 100, a maximum number of puffs, a temperature profile, the user's smoking information, and information for battery authentication.

Also, the main memory 150 may store operation information of the aerosol generating device 100 measured by the battery monitoring unit 170.

The battery monitoring unit 170 may monitor operation information of the removable battery 110 and may provide the operation information to the main processor 130, under the control of the main processor130. In this case, the operation information of the removable battery 110 may include a no-load voltage of the battery, a temperature of the battery, a state of charge (SOC) of the battery, and the number of charge/discharge cycles of the battery. In this case, an SOC calculation unit may be provided in the battery monitoring unit 170, or may be implemented as a certain module in an area (e.g., the main processor 130) other than the battery monitoring unit 170.

Although not shown in FIG. 1, the aerosol generating device 100 may constitute an aerosol generating system together with a separate cradle. For example, the cradle may be used to store the aerosol generating device 100 and charge the removable battery 110 of the aerosol generating device 100. That is, the cradle may be a dedicated device for the aerosol generating device 100 to receive power from a battery of the cradle and charge the removable battery 110 of the aerosol generating device 100 in a state where the aerosol generating device 100 is accommodated in a receiving space of the cradle.

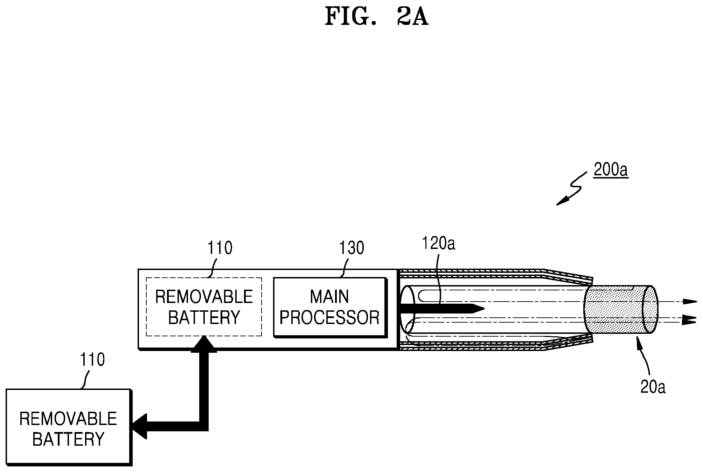

FIGS. 2A through 2E are diagrams illustrating embodiments of the aerosol generating device of FIG. 1, which is implemented in various types. Referring to FIGS. 2A through 2E, the aerosol generating device 100 may be implemented as various types of aerosol generating devices 200a through 200e using an electrically resistive heating method or an induction heating method, a method that additionally includes a vaporizer, a cartridge method, or the like. FIGS. 2A through 2E only show some elements to describe the types of aerosol generating devices 200a through 200e, and other general elements may be further included in the aerosol generating devices 200a through 200e in addition to the elements shown in FIGS. 2A through 2E.

In FIGS. 2A through 2E, the removable battery 110, heaters 120a through 120e, and the main processor 130 are components respectively corresponding to the removable battery 110, the heater 120, and the main processor 130 of FIG. 1, which may perform functions of the removable battery 110, the heater 120, and the main processor 130 described above in FIG. 1.

FIG. 2A is a diagram to describe an aerosol generating device 200a in an electrically resistive method, according to an embodiment. The aerosol generating device 200a may be a type of the aerosol generating device 100.

Referring to FIG. 2A, the aerosol generating device 200a may include the removable battery 110, a heater 120a, and the main processor 130.

A cigarette 20a may be inserted into an accommodation space inside the aerosol generating device 200a. When the cigarette 20a is inserted into the aerosol generating device 200a, the aerosol generating device 200a may generate aerosols from the cigarette 20a by heating the cigarette 20a by using the heater 120a. Because the generated aerosols are delivered to the user by passing through the cigarette 20a, the user may smoke the cigarette 20a.

The heater 120a may be heated by power supplied from the removable battery 110. The heater 120a may be an electrically resistive heater. For example, the heater 120a may include an electrically conductive track, and the heater 120a may be heated when currents flow through the electrically conductive track.

The electrically conductive track of the heater 120a may be made of an electrically resistive material and a heating temperature thereof may be determined according to power consumption of resistance, and a resistance value of the electrically conductive track may be set based on the power consumption of resistance of the electrically conductive track. The resistance value of the electrically conductive track may be variously set according to a configuring material, length, width, thickness, pattern, or the like of the electrically resistive material.

The electrically conductive track may have an internal resistance level that increases as temperature increases, according to a resistance temperature coefficient characteristic. For example, in a certain temperature range, the temperature of the electrically conductive track and the size of resistance may be proportional. By using such a principle, the heater 120a made of the electrically conductive track may heat the cigarette 20a in the electrically resistive method.

The electrically conductive track may be made of tungsten, gold, platinum, silver copper, nickel palladium, or a combination thereof. Also, the electrically conductive track pattern may be doped with a suitable dopant and may include an alloy.

The shape of the heater 120a may be manufactured in various ways, such as a tube shape, a plate shape, a needle shape, a rod shape, or the like. In addition, the heater 120a may be arranged with a plurality of heaters. The heater 120a may be used in an internal heating method of heating the inside of the cigarette 20a by being inserted into the interior of the cigarette 20a.

The removable battery 110 may be separated from or mounted in the aerosol generating device 200a. When the removable battery 110 is mounted in the aerosol generating device 200a, power may be supplied to the heater 120a from the removable battery 110 to control the temperature of the electrically conductive track to perform a heating operation of the heater 120a.

The main processor 130 may control the heating operation of the heater 120a by controlling the power supplied to the heater 120a. For example, the main processor 130 may control a temperature at which the cigarette 20a is heated by the heater 120a, according to a temperature profile.

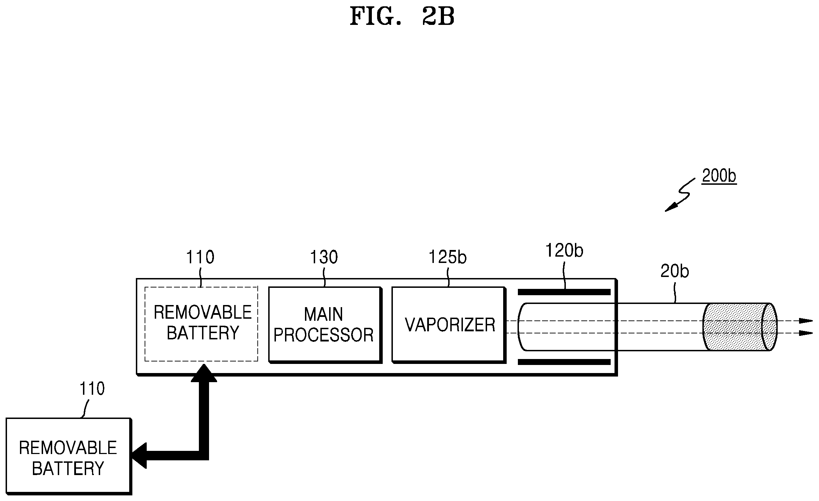

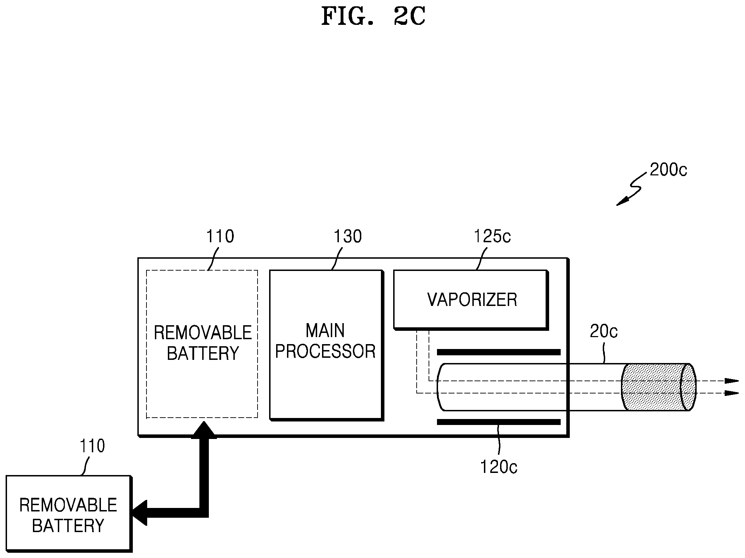

FIGS. 2B and 2C are diagrams to describe aerosol generating devices 200b and 200c additionally including vaporizers 125b and 125c, respectively, according to embodiments. Each of the aerosol generating devices 200b and 200c may be a type of the aerosol generating device 100.

Referring to FIGS. 2B and 2C, the aerosol generating devices 200b and 200c further include the vaporizers 125b and 125c, respectively. Cigarettes 20b and 20c may be inserted into inner spaces of the aerosol generating devices 200b and 200c, respectively.

FIG. 2B illustrates that the vaporizer 125b and a heater 120b are arranged in a row. However, FIG. 2C illustrates that the vaporizer 125c and a heater 120c are arranged in parallel. That is, the aerosol generating devices 200b and 200c may be distinguished depending on a way the vaporizer 125b is arranged.

The heaters 120b and 120c may be heated by power supplied from the removable battery 110. The heaters 120b and 120c are electrically resistive heaters and may include, for example, electrically conductive tracks.

Unlike the heater 120a described with reference to FIG. 2A, the heaters 120b and 120c in FIGS. 2B and 2C may be implemented in an external heating method of heating outer surfaces of the cigarettes 20b and 20c by being arranged on outer peripheries of the cigarettes 20b and 20c.

The vaporizers 125b and 125c may generate aerosols by heating a liquid composition, and the generated aerosols may pass through the cigarettes 20b and 20c to be delivered to the user. In other words, the aerosols generated by the vaporizers 125b and 125c may be transported along an air flow passage of the aerosol generating devices 200b and 200c, and the air flow passage may be configured so that the aerosols generated by the vaporizers 125b and 125c pass through the cigarettes 20b and 20c to be delivered to the user.

The vaporizers 125b and 125c may include a liquid storage unit, a liquid delivery element, and a heating element (or a vaporizing element). However, each of the liquid storage unit, the liquid delivery element, and the heating element is an independent module, which may also be arranged in other locations within the aerosol generating device 100 instead of within the vaporizers 125b and 125c.

The liquid storage unit may store a liquid composition. For example, the liquid composition may be a liquid including a tobacco-containing material having a volatile tobacco flavor component, or a liquid including a non-tobacco material. The liquid storage unit may be formed to be detached/attached from/to the vaporizers 125b and 125c or may be formed integrally with the vaporizers 125b and 125c. For example, the liquid composition may include water, a solvent, ethanol, plant extract, spices, flavorings, or a vitamin mixture. Also, the liquid composition may include an aerosol forming agent, such as glycerin and propylene glycol.

The liquid delivery element may deliver the liquid composition of the liquid storage unit to the heating element. For example, the liquid delivery element may be a wick such as cotton fiber, ceramic fiber, glass fiber, or porous ceramic, but is not limited thereto.

The heating element provided in the vaporizers 125b and 125c is an element configured to heat (vaporize) the liquid composition delivered by the liquid delivery element. For example, the heating element may be a metal heating wire, a metal hot plate, a ceramic heater, or the like, but is not limited thereto. In addition, the heating element may include a conductive filament such as nichrome wire and may be positioned as being wound around the liquid delivery element. The heating element may be heated by a current supply and may transfer heat to the liquid composition in contact with the heating element, thereby heating the liquid composition. As a result, aerosols may be generated. Accordingly, the vaporizers 125b and 125c may also be referred to as in other terms such as cartomizers or atomizers.

The removable battery 110 may be separated from or mounted in the aerosol generating devices 200b and 200c. When the removable battery 110 is mounted in the aerosol generating devices 200b and 200c, power may be supplied to the heaters 120b and 120c and the vaporizers 125b and 125c from the removable battery 110 to perform heating operations of the heaters 120b and 120c and the vaporizers 125b and 125c.

The main processor 130 may control the heating operations of the heaters 120b and 120c and the vaporizers 125b and 125c by controlling power supplied to the heaters 120b and 120c and the vaporizers 125b and 125c. For example, the main processor 130 may control temperatures at which the cigarettes 20b and 20c are heated by the heaters 120b and 120c and the vaporizers 125b and 125c, according to temperature profiles.

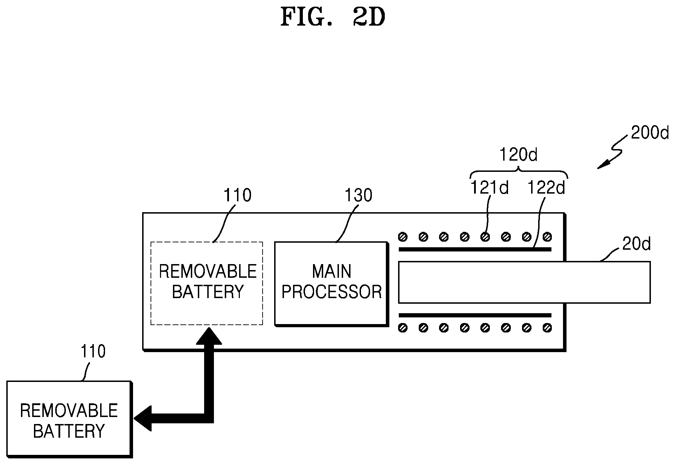

FIG. 2D is a diagram to describe an aerosol generating device 200d in an induction heating method, according to an embodiment. The aerosol generating device 200d may be a type of the aerosol generating device 100.

Referring to FIG. 2D, the aerosol generating device 200d may include a heater 120d including a coil 121d and a susceptor 122d, the removable battery 110, and the main processor 130.

The aerosol generating device 200d may generate aerosols by heating a cigarette 20d accommodated in the aerosol generating device 200d in an induction heating method. The induction heating method may refer to a method of heating a magnetic body by applying an alternating magnetic field, which has a periodically changing direction, to the magnetic body generating heat by an external magnetic field. Accordingly, the aerosol generating device 200d may release thermal energy from the magnetic body by applying the alternating magnetic field to the magnetic body, and may transfer the thermal energy released from the magnetic body to the cigarette 20d, thereby heating the cigarette 20d. Here, the magnetic body generating heating by an external magnetic field may be the susceptor 122d. The susceptor 122d may be provided in the aerosol generating device 200d. Alternatively, the susceptor 122d may also be provided inside the cigarette 20d in the shape of a piece, thin plate, strip, or the like, instead of being provided in the aerosol generating device 200d.

The susceptor 122d may include a ferromagnetic substance. For example, the material of the susceptor 122d may include metal or carbon. The material of the susceptor 122d may include at least one of ferrite, ferromagnetic alloy, stainless steel, and aluminum (Al). Also, the material of the susceptor 122d may include at least one of a ceramic such as graphite or zirconia, a transition metal such as nickel (Ni) or cobalt (Co), and a metalloid such as boron (B) or phosphorus (P).

The aerosol generating device 200d may accommodate the cigarette 20d. A space accommodating the cigarette 20d may be formed in the aerosol generating device 200d. The susceptor 122d may be arranged around the periphery of the space that accommodates the cigarette 20d. For example, the susceptor 122d may have a cylindrical shape surrounding the outside of the cigarette 20d. Accordingly, when the cigarette 20d is accommodated in the aerosol generating device 200d, the cigarette 20d may be accommodated in an accommodation space of the susceptor 122d, and the susceptor 122d may be arranged at a position surrounding at least a portion of an outer surface of the cigarette 20d. However, the shape of the susceptor 122d is not limited thereto and may vary.

As the heater 120d is in an induction heating method, the heater 120d may heat the cigarette 20d accommodated in the aerosol generating device 200d by using the susceptor 122d that generates heat by an external magnetic field generated by the coil 121d.

The coil 121d may be arranged to be wound along the outer surface of the susceptor 122d, so that an alternating magnetic field may be applied to the susceptor 122d. When power is supplied to the coil 121d from the aerosol generating device 200d, a magnetic field may be formed inside the coil 121d. When an alternating current is applied to the coil 121d, a direction of the magnetic field formed inside the coil 121d may be continuously changed. When the susceptor 122d is located inside the coil 121d and is exposed to an alternating magnetic field having a periodically changing direction, the susceptor 122d may generate heat, and a cigarette accommodated in the susceptor 122d may be heated. The shape of the coil 121d may be a cylindrical shape wound along the cigarette 20d, but is not limited thereto, and the coil 121d may also be implemented in various types, such as a flat coil or the like.

The removable battery 110 may be separated from or mounted in the aerosol generating device 200d. When the removable battery 110 is mounted in the aerosol generating device 200d, for example, power may be supplied to the coil 121d to perform a heating operation of the heater 120d.

The main processor 130 may control the heating operation of the heater 120d by controlling the power supplied to the coil 121d. For example, the main processor 130 may control a temperature at which the cigarette 20d is heated by induction heating of the susceptor 122d by adjusting the intensity of a magnetic field induced by the coil 121d according to a temperature profile.

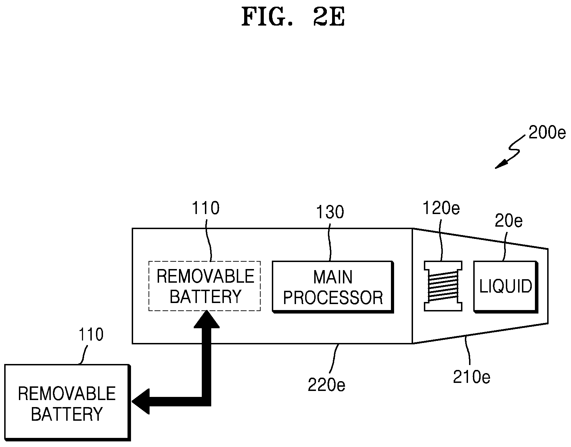

FIG. 2E is a diagram to describe an aerosol generating device 200e including a replaceable cartridge 210e containing an aerosol generating material 20e.

The aerosol generating device 200e of FIG. 2E includes the cartridge 210e containing the aerosol generating material 20e, and a body 220e supporting the cartridge 210e. The aerosol generating device 200e may correspond to a type of the aerosol generating device 100 of FIG. 1. At this time, the hardware components included in the aerosol generating device 100 of FIG. 1 may be dividedly positioned in the body 220e and the cartridge 210e.

The cartridge 210e may be coupled to the body 220e in a state in which the aerosol generating material 20e is accommodated therein. The cartridge 210e may be mounted on the body 220e by inserting a portion of the cartridge 210e into a receptacle of the body 220e.

The cartridge 210e may contain the aerosol generating material 20e of a liquid composition, but is not limited thereto, and may contain the aerosol generating material 20e in any one of a solid state, a gaseous state, or a gel state. For example, the liquid composition may be a liquid including a tobacco-containing material having a volatile tobacco flavor component, or a liquid including a non-tobacco material.

A heater 120e provided in the cartridge 210e performs a heating operation by an electrical signal or wireless signal transmitted from the body 220e. Accordingly, aerosols may be generated by vaporizing the aerosol generating material 20e inside the cartridge 210e by heating of the heater 120e.

The heater 120e may be implemented as a conductive filament or ceramic heating body including a metal material, such as copper, nickel, tungsten, or the like, to heat an aerosol generating material delivered by a liquid delivery element by generating heat through electrical resistance, and may be wound around the liquid delivery element or arranged adjacent to the liquid delivery element.

The removable battery 110 may be separated from or mounted in the aerosol generating device 200e. When the removable battery 110 is mounted in the aerosol generating device 200e, power may be supplied to the heater 120e from the removable battery 110 to perform a heating operation of the heater 120e.

The main processor 130 may control the heating operation of the heater 120e by controlling the power supplied to the heater 120e. For example, the main processor 130 may control a temperature at which the aerosol generating material 20e is heated by the heater 120e, according to a temperature profile.

Although not illustrated in FIGS. 2A through 2E, the aerosol generating devices 200a through 200e and a separate cradle may form together a system. For example, the cradle may store the aerosol generating devices 200a through 200e or perform charging of the removable battery 110 of the aerosol generating devices 200a through 200e.

According to various embodiments, the aerosol generating device 100 of FIG. 1 may be implemented as at least one of the types of the aerosol generating devices 200a through 200e of FIGS. 2A through 2E, but is not necessarily limited thereto, and may be implemented as other types.

The aerosol generating devices 200a through 200e of FIGS. 2A through 2E may commonly use the removable battery 110 as a power source. The removable battery 110 is a battery that may be replaced by mounting in or separating from the aerosol generating devices 200a through 200e.

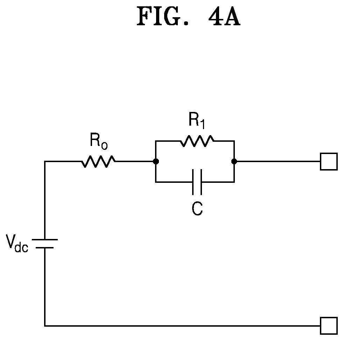

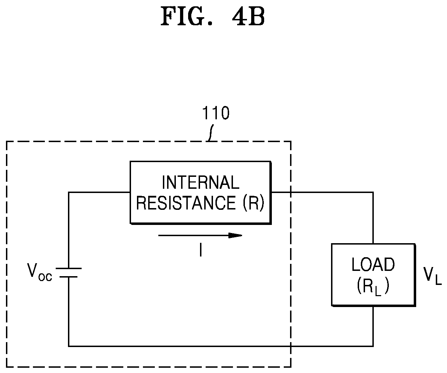

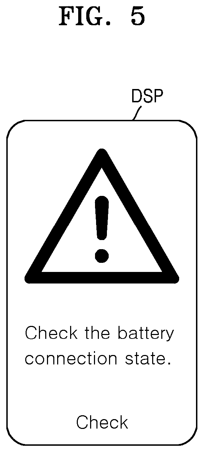

FIG. 3 is a schematic block diagram for describing a method of determining whether a battery of an aerosol generating device is normally mounted, according to an embodiment. FIG. 4A is an equivalent circuit diagram illustrating a removable battery. FIG. 4B is a diagram for describing a method of calculating internal resistance of a removable battery. FIG. 5 is a view for describing a message displayed when a removable battery is abnormally mounted on an aerosol generating device.

Referring to FIG. 3, the aerosol generating device 100 according to an embodiment may include the removable battery 110, the battery monitoring unit 170, the main processor 130, and the main memory 150.

The battery monitoring unit 170 may measure operation information of the removable battery 110. The battery monitoring unit 170 may measure a state such as a voltage, current, and temperature of the removable battery 110. To this end, the battery monitoring unit 170 may include a voltage sensor 172 for measuring a voltage, a current sensor 174 for measuring current, and temperature sensor 176 for measuring a temperature. Although not shown, the battery monitoring unit 170 may include an SOC calculation unit and a charge/discharge cycle number calculation unit.

In this case, the operation information of the removable battery 110 may include a no-load voltage of the battery, a temperature of the battery, a state of charge (SOC) of the battery, and the number of charge/discharge cycles of the battery. The SOC calculation unit and the charge/discharge cycle number calculation unit may be provided in the battery monitoring unit 170, or may be implemented as a certain module in an area (e.g., the main processor 130) other than the battery monitoring unit 170.

For convenience of explanation, although the removable battery 110 includes one battery cell in FIG. 3, according to an embodiment, the battery 110 may include a plurality of battery cells. The battery monitoring unit 170 may measure a state such as current and a voltage of a battery pack and a battery cell. The battery monitoring unit 170 may measure a state of each of a plurality of battery cells, or may measure a state of a battery pack in which a plurality of battery cells are connected. To this end, the battery monitoring unit 170 may include a plurality of sensors. That is, the battery monitoring unit 170 may include at least one voltage sensor 172, at least one current sensor 174, and at least one temperature sensor 176.

The voltage sensor 172, the current sensor 174, and the temperature sensor 176 may periodically measure a voltage, current, and temperature of the removable battery 110 and may provide a measurement result to the main processor 130. The measurement result may be provided as an analog signal or a digital signal to the main processor 130. The voltage sensor 172 may measure a voltage applied between a positive electrode and a negative electrode of the removable battery 110. For example, the voltage sensor 172 may include, for example, a differential amplification circuit that outputs a voltage signal corresponding to a voltage difference between positive and negative terminals of the removable battery 110. Here, the voltage sensor 172 may measure a voltage every second and may calculate a maximum value of the voltage, a minimum value of the voltage, and an average value of the voltage. The voltage sensor 172 may further include a voltage calculation unit (not shown) that measures a voltage of the removable battery 110 and calculates a maximum value of the voltage, a minimum value of the voltage, and an average value of the voltage from the measured voltage every second. In this case, the voltage calculation unit may be provided in the battery monitoring unit 170, or may be implemented as a certain module in an area (e.g., the main processor 130) other than the battery monitoring unit 170.

Also, the current sensor 174 may be a sensor resistor or a hall sensor. The current sensor 174 may measure a magnitude of discharging current as well as charging current. Here, the current sensor 174 may measure alternating current (AC) current of the removable battery 110.

Also, the temperature sensor 176 may be, for example, a thermal coupler used to measure a temperature. The temperature sensor 176 may generate a signal corresponding to a temperature of the removable battery 110 and may provide the signal to the main processor 130.

The main processor 130 may include an internal resistance calculation unit 130 that calculates a value of internal resistance of the removable battery 110, based on the operation information of the removable battery 110 received from the battery monitoring unit 170.

Because there is no contact terminal exposed to the outside when the aerosol generating device 100 includes an integrated battery, it is not necessary to check whether a battery is normally mounted on the device. However, as in an embodiment of the present disclosure, when the aerosol generating device 100 includes the removable battery 110, it is necessary to check whether the battery is normally mounted on the device. When the removable battery 110 is not normally mounted on the device or a foreign material is attached to a contact terminal, a malfunction or a safety-related accident may occur if the aerosol generating device 100 operates without taking appropriate measures.

The main processor 130 according to an embodiment of the present disclosure may calculate internal resistance, which is one of unique characteristics of the removable battery 110, through the internal resistance calculation unit 132, and may simply and quickly determine whether the removable battery 110 is normally coupled to the device by using a calculation result.

Referring to FIG. 4A, the removable battery 110 may be equalized as a circuit including a direct current (DC) voltage source Vdc, a series resistance R0, a polarization resistance R1, and a capacitive induction resistance C. The series resistance R0 may be affected by a metal cover, an electrode, and contact resistance of the battery. The polarization resistance R1 may be affected by resistance due to a polarization phenomenon during an electrochemical reaction in the battery, electrolyte conductivity, an ion mobility, electrochemical reaction rate, etc., and the capacitive induction resistance C (or capacitance) may be generated when an electrode and an electrolyte form a double-layer capacitor. The polarization resistance R1 and the capacitive induction resistance C may be criteria for indicating a state of charge (SOC) of the battery. Inductive induction resistance generally plays a negligible role in the battery especially at low frequencies, and thus, may be omitted.

Internal resistance of the removable battery 110 according to an embodiment may be maintained constant throughout the life of the battery regardless of the number of charge/discharge cycles. For example, when the removable battery 110 made of lead acid or lithium-ion includes an improved electrolyte additive for preventing internal corrosion, a value of internal resistance of the removable battery 110 may be maintained substantially the same throughout the life of the battery.

Internal resistance of the removable battery 110 may be calculated by using any one of a DC load method, an AC conductance measurement method, and an electrochemical impedance spectroscopy method. For example, the internal resistance calculation unit 132 may calculate internal resistance by using the DC load method. Referring to FIG. 4B, the voltage sensor 172 of the battery monitoring unit 170 may measure a no-load voltage VOC in a state where a load RL is not connected to the removable battery 110, and the voltage sensor 172 may measure a load voltage VL in a state where the load RL is connected to the removable battery 110. The load RL may be resistance having a preset resistance value.

The internal resistance calculation unit 132 may calculate internal resistance R of the removable battery 110 by using operation information (e.g., the no-load voltage VOC and the load voltage VL) received from the battery monitoring unit 170 and Equation 1 below.

[Equation 1]

$$R = \frac{(Voc\text{-}VL)}{VL} \times RL$$

In this case, R denotes the internal resistance, Voc denotes the no-load voltage of the battery, VL denotes the load voltage, and RL denotes load resistance.

The main processor 130 may determine whether the removable battery 110 is normally mounted in a receiving portion of the aerosol generating device 100, by comparing a value of the calculated internal resistance R of the removable battery 110 with a preset reference value. For example, when the calculated internal resistance R of the main processor 130 is within a preset reference value range, the removable battery 110 may determine that the removable battery 110 is normally mounted in the receiving portion of the aerosol generating device 100 and may activate the aerosol generating device 100. On the other hand, when the calculated internal resistance R is outside the preset reference value range, the main processor 130 may determine that the removable battery 110 is abnormally mounted in the receiving portion of the aerosol generating device 100 and may deactivate the aerosol generating device 100. In this case, the preset reference value is an internal resistance value of the removable battery 110 which is estimated experimentally and statistically.

The main processor 130 according to an embodiment may store the value of the calculated internal resistance R as a reference value when the aerosol generating device 100 is turned off (or the removable battery 110 is removed from the receiving portion). When a replacement event of the removable battery 110 occurs, the main processor 130 may determine whether the replaced battery 110 is normally mounted, by comparing a value of the internal resistance R which is newly calculated with a reference value most recently stored in the main memory 150.

Referring to FIG. 5, when the calculated internal resistance R is outside the preset reference value range, the main processor 130 according to an embodiment may provide a user with a message for checking whether the removable battery 110 is normally mounted in the receiving portion of the aerosol generating device 100 through a display DSP of the user interface 140. Accordingly, because the user of the aerosol generating device 100 may immediately check whether the removable battery 110 is normally mounted on the device, the risk of a malfunction and a safety-related accident of the aerosol generating device 100 may be reduced.

Hereinafter, other embodiments will be described. In the embodiments below, the same configuration as that described in the above embodiments will not be described or will be briefly described, and a difference will be mainly described.

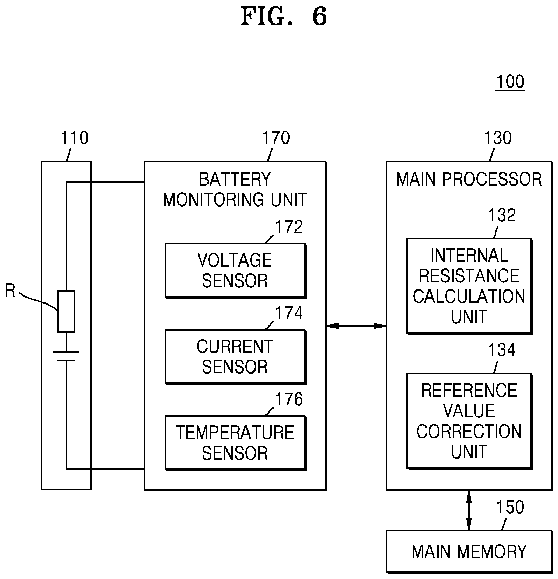

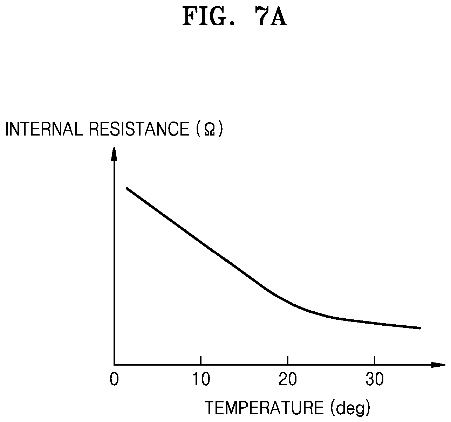

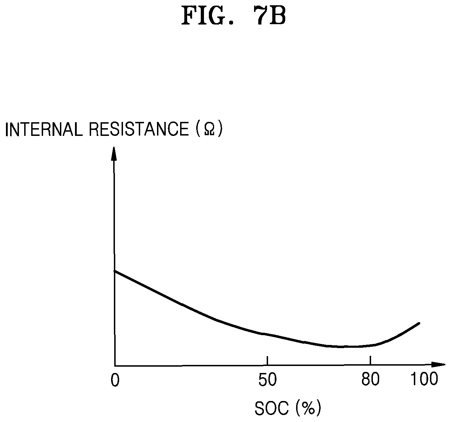

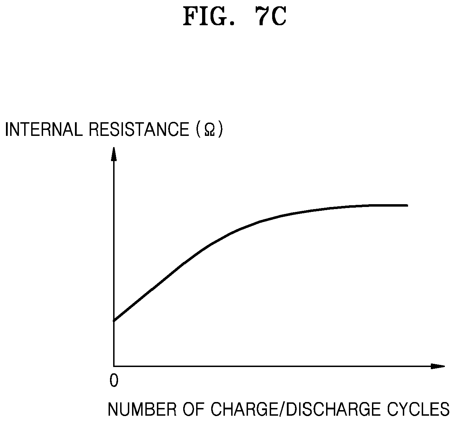

FIG. 6 is a schematic block diagram for describing a method of determining whether a battery of an aerosol generating device is normally mounted, according to another embodiment. FIG. 7A is a graph illustrating a change in internal resistance according to a temperature. FIG. 7B is a graph illustrating a change in internal resistance according to an SOC. FIG. 7C is a graph illustrating a change in internal resistance according to the number of charge/discharge cycles.

The main processor 130 of FIG. 6 is substantially the same as the main processor 130 of FIG. 3 except that the main processor 130 of FIG. 6 further includes a reference value correction unit 134 in addition to the internal resistance calculation unit 132 whereas the main processor 130 of FIG. 3 includes only the internal resistance calculation unit 132. Hereinafter, a function of the reference value correction unit 134 will be mainly described.

The main processor 130 according to an embodiment of the present disclosure may determine whether the removable battery 110 is normally mounted in a receiving portion of the aerosol generating device 100 by calculating internal resistance R, which is one of unique characteristics of the removable battery 110, through the internal resistance calculation unit 132, calculating a reference value based on operation information of the removable battery 110 through the reference value correction unit 134, and comparing the calculated internal resistance R with the calculated reference value range.

Referring to FIG. 7A, the internal resistance R of the removable battery 110 according to an embodiment may vary according to a temperature. For example, the internal resistance R may generally decrease as a temperature of the battery increases and generally increase as a temperature of the battery decreases. In this case, FIG. 7A is a graph illustrating a relationship between a value of the internal resistance R and a temperature for a specific battery 110, and a relationship between a value of the internal resistance R and a temperature may be different for each type of battery 110. The main memory 150 may store a relationship between a value of the internal resistance R and a temperature for each type of battery 110 as a lookup table.

Referring to FIG. 7B, the internal resistance R of the removable battery 110 according to an embodiment may vary according to a state of charge (SOC) of the removable battery 110. For example, the internal resistance R may gradually decrease as an SOC of the battery decreases from 100% to 80% and may gradually increase as an SOC of the battery decreases from 80% to 0%. The internal resistance R of the battery 110 may be maintained relatively low in a range of about 50% to about 80%. In this case, FIG. 7B is a graph illustrating a relationship between a value of the internal resistance R and an SOC for a specific battery 110, and a relationship between a value of the internal resistance R and an SOC may be different for each type of battery 110. The main memory 150 may store a relationship between a value of the internal resistance R and an SOC for each type of battery 110 as a lookup table.

Also, referring to FIG. 7C, the internal resistance R of the removable battery 110 according to an embodiment may vary according to the number of charge/discharge cycles. For example, the internal resistance R may generally increase as the number of charge/discharge cycles of the battery increases. The internal resistance R may converge to a specific value when the number of charge/discharge cycles of the battery reaches a specific number. In this case, FIG. 7C is a graph illustrating a relationship between a value of the internal resistance R and the number of charge/discharge cycles for a specific battery 110, and a relationship between a value of the internal resistance R and the number of charge/discharge cycles may be different for each type of battery 110. The main memory 150 may store a relationship between a value of the internal resistance R and the number of charge/discharge cycles for each type of battery 110 as a lookup table.

The reference value correction unit 134 according to an embodiment may update (or correct) a preset reference value based on at least one of the lookup tables for the temperature of the battery, the SOC of the battery, and the number of charge/discharge cycles of the battery stored in the main memory 150.

The main processor 130 may determine whether the removable battery 110 is normally mounted in the receiving portion of the aerosol generating device 100 by comparing a value of the calculated internal resistance R of the removable battery 110 with the updated reference value range. For example, when the calculated internal resistance R is within the updated reference value range, the main processor 130 may determine that the removable battery 110 is normally mounted in the receiving portion of the aerosol generating device 100 and may activate the aerosol generating device 100. On the other hand, when the calculated internal resistance R is outside the updated reference value range, the main processor 130 may determine that the removable battery 110 is abnormally mounted in the receiving portion of the aerosol generating device 100 and may deactivate the aerosol generating device 100.

As such, the aerosol generating device 100 according to an embodiment of the present disclosure may update a preset reference value through the reference value correction unit 134 in response to conditions (e.g., a temperature of the battery, an SOC of the battery, and the number of charge/discharge cycles of the battery) at the time when the removable battery 110 is mounted, thereby improving the accuracy of determining whether the removable battery 110 is normally mounted.

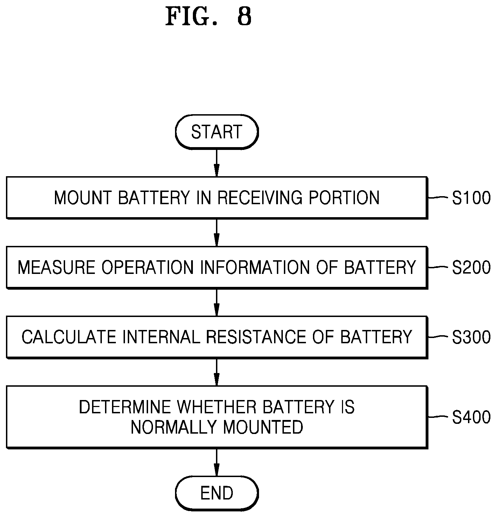

FIG. 8 is a flowchart for describing an operating method for an aerosol generating device, according to an embodiment.

Referring to FIGS. 1 to 8, an operating method for an aerosol generating device according to an embodiment may include operation S100 in which the removable battery 110 is mounted in a receiving portion of the aerosol generating device 100, operation S200 in which operation information of the removable battery 110 is measured, operation S300 in which internal resistance S of the battery is calculated based on the operation information of the removable battery 110, and operation S400 in which it is determined whether the removable battery 110 is normally mounted in the receiving portion of the aerosol generating device 100 by comparing a value of the calculated internal resistance R with a preset reference value range.

In detail, in operation S100, a user may couple the removable battery 110 to the receiving portion of the aerosol generating device 100.

In operation S200, the battery monitoring unit 170 may measure operation information of the removable battery 110. The battery monitoring unit 170 may measure a state such as a voltage, current, and temperature of the removable battery 110. To this end, the battery monitoring unit 170 may include the voltage sensor 172 for measuring a voltage, the current sensor 174 for measuring current, and the temperature sensor 176 for measuring a temperature. Although not shown, the battery monitoring unit 170 may include an SOC calculation unit and a charge/discharge cycle number calculation unit.

In this case, the operation information of the removable battery 110 may include a no-load voltage of the battery, a temperature of the battery, a state of charge (SOC) of the battery, and the number of charge/discharge cycles of the battery. The SOC calculation unit and the charge/discharge cycle number calculation unit may be provided in the battery monitoring unit 170, or may be implemented as a certain module in an area (e.g., the main processor 130) other than the battery monitoring unit 170.

In operation S300, the main processor 130 according to an embodiment of the present disclosure may calculate internal resistance, which is one of unique characteristics of the removable battery 100, through the internal resistance calculation unit 132, and may simply and quickly determine whether the device and the removable battery 110 are normally coupled to each other by using a calculation result. The internal resistance calculation unit 132 may calculate the internal resistance R of the removable battery 110 by using operation information (e.g., a no-load voltage VOC and a load voltage VL) received from the battery monitoring unit 170 and Equation 1 below.

[Equation 1]

$$R = \frac{(Voc - VL)}{VL} \times RL$$

In this case, R denotes the internal resistance, , Voc denotes the no-load voltage of the battery, VL denotes the load voltage, and RL denotes load resistance.

In operation S400, the main processor 130 may determine whether the removable battery 110 is normally mounted in the receiving portion of the aerosol generating device 100, by comparing a value of the calculated internal resistance R of the removable battery 110 with a preset reference value range. For example, when the calculated internal resistance R is within the preset reference value range, the main processor 130 may determine that the removable battery 110 is normally mounted in the receiving portion of the aerosol generating device 100 and may activate the aerosol generating device 100. On the other hand, when the calculated internal resistance R is outside the preset reference value range, the main processor 130 may determine that the removable battery 110 is abnormally mounted in the receiving portion of the aerosol generating device 100 and may deactivate the aerosol generating device 100.

The main processor 130 according to another embodiment of the present disclosure may determine whether the removable battery 110 is normally mounted in the receiving portion of the aerosol generating device 100, by comparing a value of the calculated internal resistance R of the removable battery 110 with an updated reference value range. For example, when the calculated internal resistance R of the main processor 130 is within the updated reference value range, the removable battery 110 may determine that the removable battery 110 is normally mounted in the receiving portion of the aerosol generating device 100 and may activate the aerosol generating device 100. On the other hand, when the calculated internal resistance R is outside the updated reference value range, the main processor 130 may determine that the removable battery 110 is abnormally mounted in the receiving portion of the aerosol generating device 100 and may deactivate the aerosol generating device 100.

Those of ordinary skill in the art pertaining to the present embodiments can understand that various changes in form and details can be made therein without departing from the scope of the characteristics described above. The disclosed methods should be considered in descriptive sense only and not for purposes of limitation. The scope of the present disclosure is defined by the appended claims rather than by the foregoing description, and all differences within the scope of equivalents thereof should be construed as being included in the present disclosure.

**Claims**

1. An aerosol generating device comprising:
a battery detachably disposed in a receiving portion;

a battery monitoring unit configured to measure operation information of the battery; and
a controller comprising an internal resistance calculation unit configured to calculate internal resistance of the battery based on the operation information of the battery,
wherein the controller is configured to determine whether the battery is normally mounted in the receiving portion by comparing a value of the calculated internal resistance with a preset reference value range.

2. The aerosol generating device of claim 1, wherein the operation information comprises a no-load voltage, a temperature, a state of charge (SOC), and a number of charge/discharge cycles of the battery.

3. The aerosol generating device of claim 2, wherein the internal resistance calculation unit comprises a load resistor connected to the battery and is configured to measure a voltage applied across the load resistor.

4. The aerosol generating device of claim 1, wherein the controller further comprises a reference value correction unit configured to update the reference value by using at least one of a temperature of the battery, an SOC of the battery, and a number of charge/discharge cycles of the battery.

5. The aerosol generating device of claim 4, wherein the reference value decreases as the temperature of the battery increases,

decreases as the SOC of the battery decreases from 100% to 80% and gradually increases as the SOC of the battery decreases from 80% to 0%, and
increases as the number of charge/discharge cycles of the battery increases.

6. The aerosol generating device of claim 1, wherein the controller is further configured to,

when the calculated internal resistance is within the preset reference value range, determine that the battery is normally mounted in the receiving portion and activate the aerosol generating device, and
when the calculated internal resistance is outside the preset reference value range, determine that the battery is abnormally mounted in the receiving portion and deactivate the aerosol generating device.

7. The aerosol generating device of claim 6, further comprising a display configured to display a message for guiding a user to normally mount the battery when it is determined by the controller that the battery is abnormally mounted in the receiving portion.

8. The aerosol generating device of claim 1, further comprising a heater configured to receive power from the battery and heat an aerosol generating article.

9. The aerosol generating device of claim 1, further comprising a memory storing the value of the calculated resistance as the reference value when the aerosol generating device is turned off.

10. The aerosol generating device of claim 9, wherein the controller is further configured to, when a replacement event of the battery occurs, determine whether the replaced battery is normally mounted by comparing the value of the calculated internal resistance with the reference value most recently stored in the memory.

11. An operating method for an aerosol generating device, comprising: mounting a battery in a receiving portion;

measuring operation information of the battery;
calculating internal resistance of the battery based on the operation information of the battery; and
determining whether the battery is normally mounted in the receiving portion by comparing a value of the calculated internal resistance with a preset reference value range.

12. The operating method for the aerosol generating device of claim 11, wherein the operation information comprises a no-load voltage, a temperature, a state of charge (SOC), and a number of charge/discharge cycles of the battery.

13. The operating method for the aerosol generating device of claim 12, wherein the calculating of the internal resistance comprises measuring a voltage applied across a load resistor connected to the battery.

14. The operating method for the aerosol generating device of claim 11, wherein the determining whether the battery is normally mounted in the receiving portion comprises:
when the calculated resistance is within the preset reference value range, determining that the battery is normally mounted in the receiving portion and activating the aerosol generating device; and
when the calculated internal resistance is outside the preset reference value range, determining that the battery is abnormally mounted in the receiving portion and deactivating the aerosol generating device.

15. The operating method for the aerosol generating device of claim 14, further comprising displaying, on a display, a message for guiding a user to normally mount the battery when it is determined that the battery is abnormally mounted in the receiving portion.

# FIG. 1

AEROSOL GENERATING DEVICE — 100

USER INTERFACE — 140

HEATER — 120

BATTERY MONITORING UNIT — 170

MAIN PROCESSOR — 130

SENSOR — 160

REMOVABLE BATTERY — 110

MAIN MEMORY — 150

REMOVABLE BATTERY — 110

# FIG. 2A

EP 4 772 057 A1

## FIG. 2B

# FIG. 2C

EP 4 772 057 A1

FIG. 2D

## FIG. 2E

EP 4 772 057 A1

# FIG. 3

100

110     170     130

BATTERY MONITORING UNIT

MAIN PROCESSOR

R

172
VOLTAGE SENSOR

132
INTERNAL RESISTANCE CALCULATION UNIT

174
CURRENT SENSOR

176
TEMPERATURE SENSOR

150
MAIN MEMORY

20

FIG. 4A

# FIG. 4B

110

INTERNAL
RESISTANCE (R)

I

$V_{oc}$

LOAD
$(R_L)$

$V_L$

# FIG. 5

DSP

Check the battery
connection state.

Check

# FIG. 6

FIG. 7A

INTERNAL RESISTANCE (Ω)

TEMPERATURE (deg)

0     10     20     30

# FIG. 7B

INTERNAL RESISTANCE (Ω)

SOC (%)

FIG. 7C

INTERNAL RESISTANCE (Ω)

NUMBER OF CHARGE/DISCHARGE CYCLES

# FIG. 8

START

MOUNT BATTERY IN RECEIVING PORTION — S100

MEASURE OPERATION INFORMATION OF BATTERY — S200

CALCULATE INTERNAL RESISTANCE OF BATTERY — S300

DETERMINE WHETHER BATTERY IS
NORMALLY MOUNTED — S400

END

## INTERNATIONAL SEARCH REPORT

| International application No. |
|---|
| **PCT/KR2024/011534** |

### A. CLASSIFICATION OF SUBJECT MATTER

**A24F 40/95**(2020.01)i; **A24F 40/90**(2020.01)i; **A24F 40/46**(2020.01)i; **A24F 40/50**(2020.01)i; **A24F 40/57**(2020.01)i; **A24F 40/42**(2020.01)i; **H02J 7/00**(2006.01)i

According to International Patent Classification (IPC) or to both national classification and IPC

### B. FIELDS SEARCHED

Minimum documentation searched (classification system followed by classification symbols)

A24F 40/95(2020.01); A24B 15/167(2020.01); A24F 40/40(2020.01); A24F 40/42(2020.01); A24F 40/465(2020.01); A24F 40/50(2020.01); H02J 7/00(2006.01); H04B 1/40(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 에어로졸 (aerosol), 배터리 (battery), 제어 (control), 전압 (voltage), 저항 (resistance), 싸이클 (cycle)

### C. DOCUMENTS CONSIDERED TO BE RELEVANT

| Category* | Citation of document, with indication, where appropriate, of the relevant passages | Relevant to claim No. |
|---|---|---|
| Y | KR 10-2023-0086798 A (PHILIP MORRIS PRODUCTS S.A.) 15 June 2023 (2023-06-15)<br>See paragraphs [0027]-[0030] and [0048]-[0050]; claims 1-14; and figures 1-5. | 1-15 |
| Y | KR 10-2022-0124814 A (RAI STRATEGIC HOLDINGS, INC.) 14 September 2022 (2022-09-14)<br>See claim 1; and figures 4-5. | 1-15 |
| Y | KR 10-0644440 B1 (LG ELECTRONICS INC.) 10 November 2006 (2006-11-10)<br>See claims 1-2. | 1-15 |
| A | KR 10-2023-0002648 A (JAPAN TOBACCO INC.) 05 January 2023 (2023-01-05)<br>See paragraphs [0019]-[0032]. | 1-15 |
| A | WO 2021-172721 A1 (KT&G CORPORATION) 02 September 2021 (2021-09-02)<br>See paragraphs [0041]-[0047]. | 1-15 |

☐ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 November 2024** | **11 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/011534**

| Patent document cited in search report | | | Publication date (day/month/year) | Patent family member(s) | | | Publication date (day/month/year) |
|---|---|---|---|---|---|---|---|
| KR | 10-2023-0086798 | A | 15 June 2023 | CN | 110381758 | A | 25 October 2019 |
| | | | | CN | 110381758 | B | 17 June 2022 |
| | | | | CN | 114931241 | A | 23 August 2022 |
| | | | | EP | 3595465 | A1 | 22 January 2020 |
| | | | | EP | 3595465 | B1 | 31 May 2023 |
| | | | | EP | 4233585 | A2 | 30 August 2023 |
| | | | | EP | 4233585 | A3 | 28 February 2024 |
| | | | | JP | 2020-509760 | A | 02 April 2020 |
| | | | | JP | 2022-119996 | A | 17 August 2022 |
| | | | | JP | 7086094 | B2 | 17 June 2022 |
| | | | | JP | 7474284 | B2 | 24 April 2024 |
| | | | | KR | 10-2019-0125979 | A | 07 November 2019 |
| | | | | KR | 10-2024-0093887 | A | 24 June 2024 |
| | | | | KR | 10-2541143 | B1 | 12 June 2023 |
| | | | | US | 11253004 | B2 | 22 February 2022 |
| | | | | US | 11864593 | B2 | 09 January 2024 |
| | | | | US | 2020-0037668 | A1 | 06 February 2020 |
| | | | | US | 2022-0125122 | A1 | 28 April 2022 |
| | | | | WO | 2018-166925 | A1 | 20 September 2018 |
| KR | 10-2022-0124814 | A | 14 September 2022 | CN | 109068740 | A | 21 December 2018 |
| | | | | CN | 117547069 | A | 13 February 2024 |
| | | | | EP | 3442365 | A1 | 20 February 2019 |
| | | | | EP | 3442365 | B1 | 01 December 2021 |
| | | | | EP | 3972385 | A1 | 23 March 2022 |
| | | | | JP | 2019-515669 | A | 13 June 2019 |
| | | | | JP | 2022-008448 | A | 13 January 2022 |
| | | | | JP | 2023-082144 | A | 13 June 2023 |
| | | | | JP | 2024-120061 | A | 03 September 2024 |
| | | | | JP | 6949870 | B2 | 13 October 2021 |
| | | | | JP | 7258095 | B2 | 14 April 2023 |
| | | | | JP | 7511043 | B2 | 04 July 2024 |
| | | | | KR | 10-2018-0126081 | A | 26 November 2018 |
| | | | | KR | 10-2024-0057438 | A | 02 May 2024 |
| | | | | KR | 10-2437935 | B1 | 30 August 2022 |
| | | | | US | 10945462 | B2 | 16 March 2021 |
| | | | | US | 11589421 | B2 | 21 February 2023 |
| | | | | US | 11844152 | B2 | 12 December 2023 |
| | | | | US | 2017-0290371 | A1 | 12 October 2017 |
| | | | | US | 2021-0137171 | A1 | 13 May 2021 |
| | | | | US | 2023-0171852 | A1 | 01 June 2023 |
| | | | | US | 2024-0074001 | A1 | 29 February 2024 |
| | | | | WO | 2017-178994 | A1 | 19 October 2017 |
| KR | 10-0644440 | B1 | 10 November 2006 | | None | | |
| KR | 10-2023-0002648 | A | 05 January 2023 | CN | 115697103 | A | 03 February 2023 |
| | | | | CN | 115697103 | B | 09 July 2024 |
| | | | | EP | 4145957 | A1 | 08 March 2023 |
| | | | | EP | 4145957 | A4 | 08 May 2024 |
| | | | | JP | 2022-156058 | A | 14 October 2022 |
| | | | | JP | 6967169 | B1 | 17 November 2021 |
| | | | | KR | 10-2547029 | B1 | 26 June 2023 |

Form PCT/ISA/210 (patent family annex) (July 2022)

**INTERNATIONAL SEARCH REPORT**
Information on patent family members

International application No.

**PCT/KR2024/011534**

| Patent document cited in search report | | | Publication date (day/month/year) | Patent family member(s) | | | Publication date (day/month/year) |
|---|---|---|---|---|---|---|---|
| | | | | US | 11832653 | B2 | 05 December 2023 |
| | | | | US | 2023-0096107 | A1 | 30 March 2023 |
| | | | | WO | 2022-210630 | A1 | 06 October 2022 |
| WO | 2021-172721 | A1 | 02 September 2021 | CN | 113556948 | A | 26 October 2021 |
| | | | | CN | 113556948 | B | 02 April 2024 |
| | | | | EP | 3897244 | A1 | 27 October 2021 |
| | | | | EP | 3897244 | A4 | 24 November 2021 |
| | | | | EP | 3897244 | B1 | 11 September 2024 |
| | | | | KR | 10-2021-0108146 | A | 02 September 2021 |
| | | | | KR | 10-2477683 | B1 | 14 December 2022 |

Form PCT/ISA/210 (patent family annex) (July 2022)